# FASCICULE DE BREVET EUROPEEN

(11) **EP 2 408 652 B1**
(45) Date de publication et mention de la délivrance du brevet: **13.03.2013**
(21) Numéro de dépôt: 10716402.2
(22) Date de dépôt: 18.03.2010
(51) Int. Cl.: B60T 13/567

(54) **DISPOSITIF DE FREINAGE PERMETTANT L'INDEXATION EN POSITION D'UN CAPTEUR POSITIONNE SUR UN EMBOUT D'UN RACCORD RELIE A UNE PAROI D'UN AMPLIFICATEUR DE FREINAGE**
BREMSVORRICHTUNG ZUR INDEXIERUNG DER POSITION EINES AM ENDE EINER MIT EINER WAND EINES BREMSVERSTÄRKERS VERBUNDENEN KUPPLUNG POSITIONIERTEN SENSORS
BRAKING DEVICE FOR INDEXING THE POSITION OF A SENSOR POSITIONED ON THE END OF A COUPLING CONNECTED TO A WALL OF A BRAKING AMPLIFIER

(30) Priorité: 19.03.2009 FR 0951774
(43) Date de publication de la demande: 25.01.2012
(73) Titulaire: Peugeot Citroën Automobiles Société Anonyme, 78140 Vélizy Villacoublay (FR)
(72) Inventeur: PECQUEUR, Arnaud, F-27150 Etrepagny (FR)
(86) Numéro de dépôt international: PCT/FR2010/050481
(87) Numéro de publication internationale: WO 2010/106288

(56) Documents cités:
- DE-A1-102004 055 409
- FR-A- 2 859 010
- US-A- 5 224 410
- US-B2- 7 055 867

## Description

La présente invention concerne un dispositif de freinage pour un véhicule, notamment pour un véhicule automobile, comportant un amplificateur de freinage, un raccord fixé à une paroi d'une chambre de dépression de l'amplificateur de freinage et un capteur fixé par un embout au raccord permettant une indexation en position du capteur fixé sur l'embout du raccord.

La présente invention concerne aussi un capteur comportant un joint assurant l'étanchéité du montage, dont les moyens d'indexation avec l'embout du raccord permettent d'éviter audit joint de subir des contraintes de cisaillement, altérant l'étanchéité dudit montage.

On connaît de l'état de la technique, notamment de la demande FR0856620 un raccord venant se fixer sur une paroi d'une chambre de dépression d'un amplificateur de freinage et permettant de relier cette chambre de dépression à une pompe à vide. Le raccord présente une ouverture, positionnée suivant l'axe de montage de ce raccord sur la paroi de l'amplificateur de freinage, permettant l'introduction d'une première partie d'un capteur de pression. Le capteur de pression présente une seconde partie, dépassant du raccord, comportant un connecteur électrique, positionné sur une de ces surfaces latérales, permettant de relier le capteur de pression au circuit électrique du véhicule. Un tel montage permet au connecteur électrique d'être librement accessible quelle que soit la position angulaire du capteur de pression dans l'ouverture du raccord, permettant une connexion facile au circuit électrique du véhicule US 5 224 410 A décrit aussi un raccord sans support pour le capteur.

Néanmoins, pour des problèmes d'encombrement dans le compartiment moteur, le capteur de pression est plutôt connecté au raccord par un embout latéral, positionnant le capteur de pression perpendiculairement à l'axe de montage du raccord sur la paroi de l'amplificateur de freinage. Un tel positionnement pose des problèmes d'orientation du connecteur électrique, celui-ci pouvant se retrouver face à la paroi de la chambre de dépression de l'amplificateur de freinage, ne permettant plus sa connexion au circuit électrique du véhicule. Ainsi, lors de l'assemblage final du véhicule, le capteur de pression, préalablement mis en position sur le raccord (que ce soit en bord de chaîne ou chez le fournisseur de l'amplificateur de freinage), peut présenter n'importe quelle position angulaire, faisant que l'opérateur risque de devoir le repositionner en le tournant manuellement, dégradant le joint d'étanchéité en lui faisant subit des contraintes de cisaillement, altérant l'étanchéité du montage.

L'objet de l'invention est de proposer un dispositif de fixation d'un capteur sur un raccord, permettant par un moyen simple à mettre en oeuvre, d'orienter et de maintenir le capteur dans un certain positionnement sur le raccord, évitant toute rotation ultérieure risquant de dégrader un joint d'étanchéité présent entre le capteur et le raccord.

A cet effet, l'invention concerne un dispositif de freinage pour un véhicule, notamment pour un véhicule automobile, conformément à l'objet de la revendication 1.

Suivant un premier mode de réalisation les moyens de détrompage comportent une ouverture ménagée sur une surface d'appui du raccord, recevant le capteur, et un doigt solidaire du capteur coopérant avec ladite ouverture.

Suivant une variante de ce premier mode de réalisation, les moyens de détrompage comportent un doigt solidaire d'une surface d'appui du raccord, recevant le capteur, et une ouverture ménagée sur le capteur coopérant avec ledit doigt.

Suivant un second mode de réalisation, pour un capteur comportant une surface transversale complémentaire, de préférence plane telle qu'un méplat, les moyens de détrompage comportent un doigt en saillie de l'embout du raccord coopérant avec ledit surface transversale. Le doigt en saillie de l'embout est constitué du prolongement d'une nervure renforçant la liaison de l'embout sur le raccord.

L'invention concerne aussi un raccord pour dispositif de freinage présentant une des caractéristiques précédentes, comportant un embout apte à recevoir un capteur, comportant des moyens de détrompage coopérant avec ledit capteur pour obtenir une indexation en position du capteur sur ledit raccord.

D'autres avantages et caractéristiques techniques de la présente invention apparaîtront plus clairement à la lumière de la description qui suit en référence aux figures des dessins annexés parmi lesquelles :
- la figure 1, représente un amplificateur de freinage comportant un raccord et un capteur de pression suivant l'invention ;
- les figures 2 et 3, représentent des vues de détails de l'amplificateur de freinage, du raccord et du capteur de pression, suivant un premier mode de réalisation de l'invention ; et
- les figures 4 et 5, représentent des vues de détails de l'amplificateur de freinage, du raccord et du capteur de pression, suivant un second mode de réalisation de l'invention.

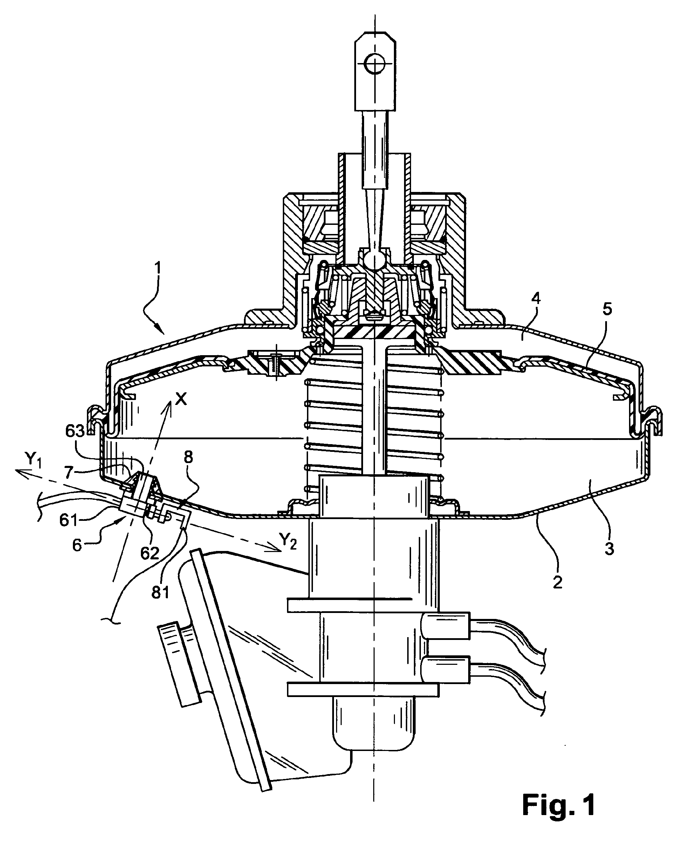

La figure 1 représente un amplificateur de freinage 1 comme bien connu de l'homme de l'art. Un tel amplificateur de freinage 1 présente une enceinte 2 comprenant une chambre avant 3 et une chambre arrière 4, les chambres avant 3 et arrière 4 étant séparées par une membrane 5. Un raccord 6, suivant l'invention, est fixé suivant un axe de montage X, par l'intermédiaire d'un manchon d'étanchéité 7, dans une ouverture circulaire de la paroi 5 de la chambre avant 3. Le raccord 6 présente un corps principal 63 se prolongeant suivant l'axe de montage X. Le raccord 6 comporte un premier embout 61 servant à relier une source de vide (seule une partie du tuyau de raccordement est représentée) à la chambre avant 3 de l'amplificateur de freinage 1 et un second embout 62 permettant le montage d'un capteur de pression 8. Le premier embout 61 et le second embout 62 sont positionnés suivant deux axes, respectivement, Y1 et Y2, positionnés perpendiculairement à l'axe de montage X. Le capteur de pression 8 est relié au circuit électrique du véhicule par un connecteur électrique 81 positionné sur une surface latéralement du capteur 8, dos à la paroi 5 de la chambre avant 3 permettant un accès facile lors de sa connexion au circuit électrique du véhicule.

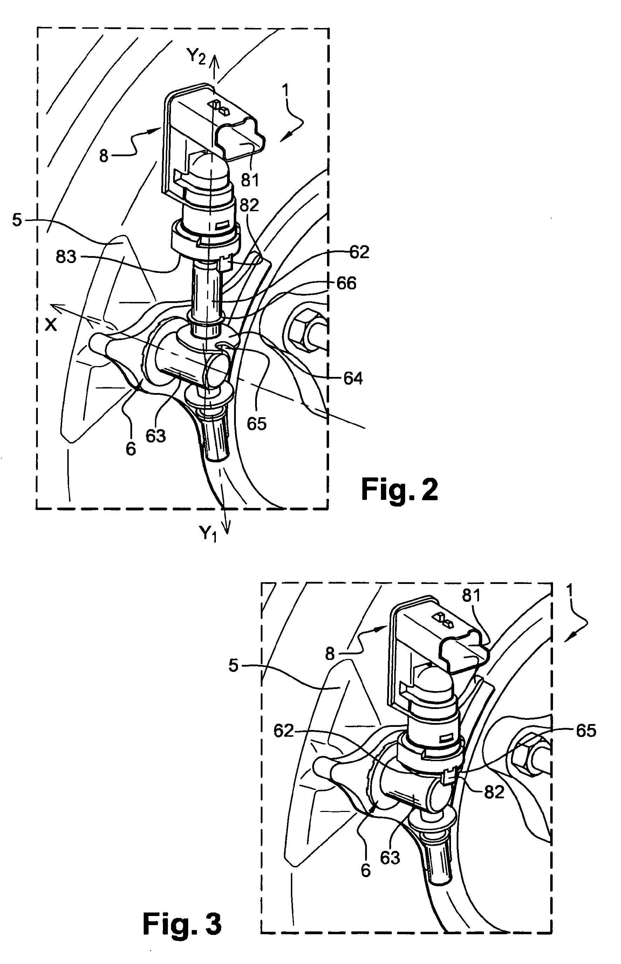

Les figures 2 et 3 représentent des vues de détails du raccord 6 et du capteur de pression 8, suivant un premier mode de réalisation de l'invention, positionnés sur la paroi 5 de la chambre avant 3 de l'amplificateur de freinage 1.

Sur la figure 2 le capteur de pression 8 est représenté non positionné sur le second embout 62 du raccord 6. Le second embout 62, raccordé latéralement au corps principal 63 du raccord 6, présente à sa base une collerette 64 formant une surface d'appui plan au capteur de pression 8. Une ouverture 65 est pratiquée sur la bordure de la collerette 64. Le capteur de pression 8 présente une surface d'appui 83 destiné à venir prendre appui contre la collerette 64 du raccord 6. De cette surface d'appui 83 se prolonge un doigt 82 apte à venir collaborer avec l'ouverture 65 de la collerette 64 du raccord 6. Le capteur de pression 8 présente une surface interne cylindrique formant la partie femelle de la connexion avec l'embout 62 du raccord 6. Cette surface interne cylindrique comporte un joint torique assurant l'étanchéité du montage. Entre ce joint torique et l'extrémité libre du capteur de pression 8 est positionnée, sur la surface interne de ce capteur de pression 8, une patte flexible venant collaborer avec une excroissance circulaire formant un anneau 66 positionnée, parallèlement à la collerette 64, sur la surface latérale de l'embout 62 du raccord 6. Cette patte flexible et la collerette 64 forment un dispositif de clippage assurant le maintien du capteur de pression 8 le long de l'embout 62 du raccord 6.

Sur la figure 3 le capteur de pression 8 est représenté clippé sur le second embout 62 du raccord 6. Pour éviter toute rotation du capteur de pression 8 autour de l'embout 62, créant des contraintes de cisaillement sur le joint assurant l'étanchéité du montage, le doigt 82 du capteur de pression 8 vient pénétrer dans l'ouverture 65 de la collerette 64. Le doigt 82 du capteur de pression 8 et l'ouverture 65 du raccord 6 servent aussi de détrompeur, positionnant le connecteur électrique 81 dos à la paroi 5 de la chambre avant 3 permettant son raccordement au circuit électrique du véhicule. Lors de la mise en position du capteur de pression 8 le long de l'embout 62 du raccord 6, un mauvais alignement de doigt 82 avec l'ouverture 65 ne permet pas d'avoir la surface d'appui 83 du capteur de pression en appui contre la collerette 64, ne permettant pas de clipper le capteur de pression 8 sur le raccord 6. Cet écart est facilement visible et permet de s'assurer de la conformité du montage.

Une variante de ce mode de réalisation peut consister à positionner sur la surface d'appui de la collerette 64 un doigt se prolongeant suivant une direction normale à sa surface venant collaborer avec une ouverture pratiquée sur la bordure de la surface d'appui 83 du capteur de pression 8. Cette variante permet aussi tout à la fois d'éviter toute éventuelle rotation du capteur de pression 8 autour de l'embout 62 du raccord 6, dégradant le joint torique, et fait office de détrompeur permettant de s'assurer que le connecteur 81 est bien orienté, facilitant sa connexion au circuit électrique du véhicule.

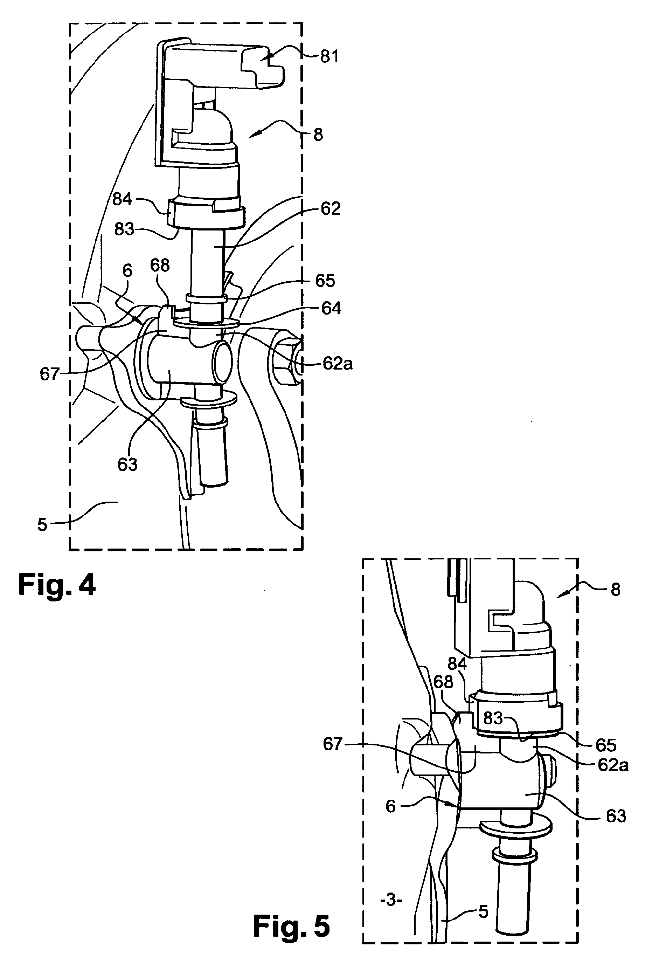

Les figures 4 et 5 représentent des vues de détails du raccord 6 et du capteur de pression 8, suivant un second mode de réalisation, positionnés sur la paroi 5 de la chambre avant de l'amplificateur de freinage 1.

Sur la figure 4 le capteur de pression 8 est représenté non positionné sur le second embout 62 du raccord 6. Dans ce second mode de réalisation est exploité le fait que la surface périphérique du capteur de pression juxtaposant la surface d'appui 83 du capteur de pression 8 n'est pas cylindrique, mais présente un méplat 84 positionné sur le côté opposé du connecteur électrique 81. Le second embout 62, comme pour le premier mode de réalisation, est raccordé latéralement au corps principal 63 du raccord 6, présentant une collerette 64 formant une face d'appui plan au capteur de pression 8. La collerette 64 présente un espacement 62a avec le corps principal 62 du raccord 6, augmentant d'autant la longueur de l'embout 62, fragilisant la liaison entre l'embout 62 et le corps principal 63 du raccord 6. La présente de cet espacement 62a est imposée par le mode de fabrication, par moulage, du raccord 6. Afin de rigidifier cette liaison, une nervure transversale 67 est positionnée entre le corps principal 63 du raccord 6, le dessous de la collerette 64 et la surface latérale de l'espacement 62a de l'embout 62. Un prolongement 68 de cette nervure 67 permet de créer un doigt juxtaposant la collerette 64, venant collaborer avec le méplat 84 du capteur de pression 8, servant de détrompeur lors du montage ce capteur de pression 8 sur le raccord 6.

Sur la figure 5 le capteur de pression 8 est représenté clippé sur l'embout 62 du raccord 6. Un joint torique est toujours positionné entre le capteur de pression et l'embout 62, assurant l'étanchéité du montage. Le prolongement 68 de la nervure 67 est positionné de tel sort à venir en contact avec le méplat 84, bloquant en rotation le capteur de pression 8 sur l'embout 62 du raccord 6. Comme pour le premier mode de réalisation, le connecteur électrique 81 est ainsi positionné dos à la paroi 5 de la chambre avant 3, permettant un accès facile lors de la connexion du connecteur électrique 81 au circuit électrique du véhicule.

Il est bien évident que les modes de réalisations qui précédent ont été donnés à titre d'exemples non limitatif et que de nombreuses variantes peuvent être envisagées sans sortir pour autant du cadre de l'invention.

## Revendications

1. Dispositif de freinage pour un véhicule, notamment pour un véhicule automobile, comportant un amplificateur de freinage (1), un capteur (8) de pression, un raccord (6) fixé à une paroi (2) d'une chambre de dépression (3) de l'amplificateur de freinage (1), le raccord (6) comportant un premier embout (61) adapté pour relier la chambre de décompression (3) de l'amplificateur de freinage (1) à une source de vide et un second embout (62) adapté pour former un support audit capteur (8) et pour relier ledit capteur (8) à la chambre de dépression (3) de l'amplificateur de freinage (1), **caractérisé en ce que** le dispositif comporte des moyens de détrompage permettant l'indexation en position du capteur (8) sur le second embout (62) du raccord (6).

2. Dispositif de freinage selon la revendication 1, **caractérisé en ce qu'**un joint est interposé entre le capteur (8) et le second embout (62), ledit joint assurant l'étanchéité du montage, lesdits moyens de détrompage permettant aussi un blocage en rotation du capteur (8) par rapport au second embout (62), évitant audit joint de subir des contraintes de cisaillement, altérant l'étanchéité dudit montage.

3. Dispositif de freinage selon la revendication 1 ou 2, **caractérisé en ce que** les moyens de détrompage comportent une ouverture (65) ménagée sur une surface d'appui du raccord (6), recevant le capteur (8), et un doigt solidaire du capteur (8) coopérant avec ladite ouverture (65).

4. Dispositif de freinage selon la revendication 1 ou 2, **caractérisé en ce que** les moyens de détrompage comportent un doigt solidaire d'une surface d'appui du raccord (6), recevant le capteur (8), et une ouverture ménagée sur le capteur (8) coopérant avec ledit doigt.

5. Dispositif de freinage selon la revendication 1 ou 2, **caractérisé en ce que**, le capteur (8) comportant au moins un méplat (84), les moyens de détrompage comportent un doigt (68) en saillie du second embout (62) du raccord (6) coopérant avec ledit méplat (84).

6. Dispositif de freinage selon la revendication 5, **caractérisé en ce que** le doigt (68) en saillie du second embout (62) est constitué du prolongement d'une nervure (67) renforçant la liaison du second embout (62) sur le raccord (6).

7. Raccord (6) pour dispositif de freinage (1) selon l'une quelconque des revendications précédentes, comportant un premier embout (61) adapté pour relier la chambre de décompression (3) de l'amplificateur de freinage (1) à une source de vide et un second embout (62) adapté pour former un support audit capteur (8) et pour relier ledit capteur (8) à la chambre de dépression (3) de l'amplificateur de freinage (1), ledit raccord (6) comportant des moyens de détrompage coopérant avec ledit capteur (8) pour obtenir une indexation en position du capteur (8) sur le second raccord (6).

8. Capteur (8) destiné à être positionné sur un second embout (62) d'un raccord (6) selon la revendication précédente, **caractérisé en ce que** ledit capteur (8) comporte des moyens de détrompage adaptés pour collaborer avec des moyens de détrompage dudit raccord (6).

## Claims

1. Braking device for a vehicle, in particular for an automobile, comprising a braking amplifier (1), a pressure sensor (8), a coupling (6) attached to a wall (2) of a negative pressure chamber (3) of the braking amplifier (1), the coupling (6) comprising a first end (61) suited to connect the negative pressure chamber (3) of the braking amplifier (1) to a vacuum source and a second end (62) suited to form a support for said sensor (8) and to connect said sensor (8) to the negative pressure chamber (3) of the braking amplifier (1), **characterised in that** the device comprises fool proofing means for indexing the position of the sensor (8) on the second end (62) of the coupling (6).

2. Braking device according to claim 1, **characterised in that** a seal is interposed between the sensor (8) and the second end (62), said seal providing the seal for the assembly, said foolproofing means also allowing for the blocking in rotation of the sensor (8) in relation to the second end (62), thus preventing said seal from being subjected to the shear stresses, altering the seal of said assembly.

3. Braking device according to claim 1 or 2, **characterised in that** the foolproofing means comprise an opening (65) arranged on a support surface for the coupling (6), receiving the sensor (8), and a finger integral with the sensor (8) cooperating with said opening (65).

4. Braking device according to claim 1 or 2, **characterised in that** the foolproofing means comprise a finger integral with a support surface for the coupling (6), receiving the sensor (8), and an opening arranged on the sensor (8) cooperating with said finger.

5. Braking device according to claim 1 or 2, **characterised in that**, the sensor (8) comprising at least one flat (84), the foolproofing means comprise a finger (68) protruding from the second end (62) of the coupling (6) cooperating with said flat (84).

6. Braking device according to claim 5, **characterised in that** the finger (68) protruding from the second end (62) is constituted of the extension of a rib (67) reinforcing the connection of the second end (62) on the coupling (6).

7. Coupling (6) for a braking device (1) as claimed in any preceding claim, comprising a first end (61) suited to connect the negative pressure chamber (3) of the braking amplifier (1) to a vacuum source and a second end (62) suited to form a support for said sensor (8) and to connect said sensor (8) to the negative pressure chamber (3) of the braking amplifier (1), said coupling (6) comprising fool proofing means cooperating with said sensor (8) in order to obtain an indexing of the position of the sensor (8) on the second coupling (6).

8. Sensor (8) intended to be positioned on a second end (62) of a coupling (6) as claimed in the preceding claim, **characterised in that** said sensor (8) comprises fool proofing means suited to collaborate with fool proofing means of said coupling (6).

## Patentansprüche

1. Bremsvorrichtung für ein Fahrzeug, im Speziellen für ein Kraftfahrzeug, umfassend einen Bremsverstärker (1), einen Drucksensor (8), einen Anschluss (6), der an einer Wand (2) einer Unterdruckkammer (3) des Bremsverstärkers (1) befestigt ist, wobei der Anschluss (6) ein erstes Ansatzstück (61) umfasst, das geeignet ist, um die Unterdruckkammer (3) des Bremsverstärkers (1) mit einer Vakuumquelle zu verbinden, und ein zweites Ansatzstück (62), das geeignet ist, um eine Halterung für den besagten Sensor (8) zu bilden, und um den besagten Sensor (8) mit der Unterdruckkammer (3) des Bremsverstärkers (1) zu verbinden, **dadurch gekennzeichnet, dass** die Vorrichtung Unverwechselbarkeitseinrichtungen umfasst, die die Positionsindexierung des Sensors (8) am zweiten Ansatzstück (62) des Anschlusses (6) ermöglichen.

2. Bremsvorrichtung nach Anspruch 1, **dadurch gekennzeichnet, dass** zwischen dem Sensor (8) und dem zweiten Ansatzstück (62) eine Dichtung eingefügt ist, wobei die besagte Dichtung für die Dichtheit des Aufbaus sorgt, und durch die besagten Unverwechselbarkeitseinrichtungen auch erreicht werden kann, dass sich der Sensor (8) in Bezug auf das zweite Ansatzstück (62) nicht verdreht, um zu vermeiden, dass die besagte Dichtung Scherbelastungen ausgesetzt wird, die die Dichtheit des besagten Aufbaus beinträchtigen.

3. Bremsvorrichtung nach Anspruch 1 oder 2, **dadurch gekennzeichnet, dass** die Unverwechselbarkeitseinrichtungen eine Öffnung (65) aufweisen, die auf einer Auflagefläche des Anschlusses (6) angeordnet ist, in der der Sensor (8) angeordnet ist, sowie einen Stift, der fest mit dem Sensor (8) verbunden ist, und der mit der besagten Öffnung (65) zusammenwirkt.

4. Bremsvorrichtung nach Anspruch 1 oder 2, **dadurch gekennzeichnet, dass** die Unverwechselbarkeitseinrichtungen einen Stift umfassen, der fest mit einer Auflagefläche des Anschlusses (6) verbunden ist, auf dem der Sensor (8) angeordnet ist, sowie eine Öffnung, die auf dem Sensor (8) angeordnet ist, die mit dem besagten Stift zusammenwirkt.

5. Bremsvorrichtung nach Anspruch 1 oder 2, **dadurch gekennzeichnet, dass** die Unverwechselbarkeitseinrichtungen, da der Sensor (8) zumindest eine Abflachung (84) umfasst, einen Stift (68) umfassen, der über das zweite Ansatzstück (62) des Anschlusses (6) übersteht, und mit der besagten Abflachung (84) zusammenwirkt.

6. Bremsvorrichtung nach Anspruch 5, **dadurch gekennzeichnet, dass** der Stift (68), der über das zweite Ansatzstück (62) übersteht, aus der Verlängerung einer Verstärkungsrippe (67) gebildet wird, die die Verbindung des zweiten Ansatzstücks (62) am Anschluss (6) verstärkt.

7. Anschluss (6) für eine Bremsvorrichtung (1) nach irgendeinem der vorherigen Ansprüche, umfassend ein erstes Ansatzstück (61), das geeignet ist, um die Unterdruckkammer (3) des Bremsverstärkers (1) mit einer Vakuumquelle zu verbinden, und ein zweites Ansatzstück (62), das geeignet ist, um eine Halterung für den besagten Sensor (8) zu bilden, und um den besagten Sensor (8) mit der besagten Unterdruckkammer (3) des Bremsverstärkers (1) zu verbinden, und der besagte Anschluss (6) Unverwechselbarkeitseinrichtungen umfasst, die mit dem besagten Sensor (8) zusammenwirken, um eine Positionsindexierung des Sensors (8) auf dem zweiten Anschluss (6) zu erhalten.

8. Sensor (8), der dazu bestimmt ist, auf einem zweiten Ansatzstück (62) eines Anschlusses (6) nach dem vorherigen Anspruch positioniert zu werden, **dadurch gekennzeichnet, dass** der besagte Sensor (8) Unverwechselbarkeitseinrichtungen umfasst, die geeignet sind, um mit Unverwechselbarkeitseinrichtungen des besagten Anschlusses (6) zusammenzuwirken.
